# EUROPEAN PATENT SPECIFICATION

(11) **EP 3 328 562 B1**
(45) Date of publication and mention of the grant of the patent: **08.06.2022**
(21) Application number: 16833616.2
(22) Date of filing: 29.07.2016
(51) Int. Cl.: B08B 9/08, B08B 9/093, B08B 3/02, B08B 3/08

(54) **CLEAN-PLACE METHOD AND SYSTEM AND COMPOSITION FOR THE SAME**
CLEAN-IN-PLACE-VERFAHREN, SYSTEM UND ZUSAMMENSETZUNG DAFÜR
SYSTÈME ET PROCÉDÉ DE NETTOYAGE SUR PLACE ET COMPOSITION ASSOCIÉE

(30) Priority: 31.07.2015 US 201562199616 P
(43) Date of publication of application: 06.06.2018
(73) Proprietor: Ecolab USA Inc., St. Paul, MN 55102 (US)
(72) Inventor: FERNHOLZ, Peter, J., Burnsville, MN 55337 (US); NAGEL, Christopher, Saint Paul, MN 55105 (US); SCHMIDT, Eric, Woodbury, MN 55125 (US); ERICKSON, Anthony, W., Golden Valley, MN 55416 (US)
(74) Representative: Godemeyer Blum Lenze Patentanwälte Partnerschaft mbB - werkpatent
(86) International application number: PCT/US2016/044733
(87) International publication number: WO 2017/023762

(56) References cited:
- EP-A1- 1 177 841
- DE-A1- 10 357 779
- FR-A1- 2 781 699
- JP-A- 2010 184 180
- US-A- 5 282 889
- US-A- 5 348 058
- US-A1- 2005 109 376
- US-A1- 2006 042 665
- US-A1- 2009 050 326
- US-A1- 2010 229 899
- US-A1- 2014 150 823

## Description

### FIELD

The present disclosure relates to clean-in-place methods and systems, and to compositions for use in clean-in-place methods. In particular, the present disclosure relates to clean-in-place methods that include applying a first and second cleaning composition to the surface being cleaned.

### BACKGROUND

Clean-in-place ("CIP") protocols and methods are used to clean the interior surfaces and other internal components of equipment that cannot be easily disassembled. Examples of equipment that typically are cleaned using CIP methods include various tanks, evaporators, heat exchangers, pipes, and other process equipment. CIP methods are particularly useful in industries that use feed stocks that spoil easily and/or that require a high level of hygiene, such as food and beverage, pharmaceutical, cosmetic, brewing, fuel ethanol, and other similar industries. Soils that contaminate equipment surfaces in these industries are characterized by their content of carbohydrates (including cellulosic materials, monosaccharides, disaccharides, oligosaccharides, starches, gums, etc.), proteins, fats, oils, minerals, and other complex materials and mixtures of materials that, when dried and/or heated, can form hard-to-remove soils and residues.

US 2010/0229899 A1 describes methods and apparatus including operating a multistage supply pump to induce a flow of the cleaning solution through one or more supply conduits to one or more dispensing devices.

US 7 159 598 B2 describes method, system and apparatus for cleaning a tank through the use of a pair of spray heads arranged in operable communication with a pump via a pair of hose lines.

When equipment is cleaned using a CIP protocol, the normal process must be stopped and the equipment emptied of any process materials. Therefore, CIP causes process down time, and particularly with equipment that requires long cleaning times (up to 10 to 12 hours), performing CIP can cause a great burden to the normal operations of a plant. Therefore, faster and more efficient CIP processes would be advantageous. It is against this background that the present disclosure is made.

### SUMMARY

A method for cleaning a piece of equipment in place includes a plurality of cleaning cycles and optionally a rinse, where each cleaning cycle includes applying a first cleaning solution from a first supply tank through a first set of nozzles; and applying a second cleaning solution from a second supply tank through a second set of nozzles. The first cleaning solution may be applied for about 20 s to about 10 min, and the second cleaning solution for about 1 min to about 60 min. The cleaning cycle can be repeated from 5 to 150 times, and the first and second cleaning solutions can be recirculated during the process.

The concentration of active ingredients in the first cleaning solution may be higher than the concentration of active ingredients in the second cleaning solution. The first and/or second cleaning solutions may include agents that provide a soil disruption effect. In some embodiments, the first and/or second cleaning solutions include a gas generating agent.

### BRIEF DESCRIPTION OF DRAWINGS

FIG. 1A is a spray dryer with a CIP system.
FIG. 1B shows a schematic depiction of a CIP system.
FIG. 2 is a flow chart of a CIP method according to an embodiment.
FIG. 3A shows a schematic depiction of a CIP system used in the method of FIG. 2.
FIG. 3B shows a schematic depiction of a CIP system used in the method of FIG. 2.
FIG. 4 is a graphical representation of the results of Example 2.

### DETAILED DESCRIPTION

The present disclosure relates to clean-in-place methods and systems and compositions for use in clean-in-place methods. In particular, the present disclosure relates to clean-in-place methods that include alternating spraying a first composition and a second composition to the surface being cleaned. In some embodiments, the first composition includes a gas generating composition.

The term "about" is used here in conjunction with numeric values to include normal variations in measurements as expected by persons skilled in the art, and is understood have the same meaning as "approximately" and to cover a typical margin of error, such as + 5 % of the stated value.

The methods of the present disclosure may be particularly suitable for systems that include two or more spray systems, for example, a first spray system that is used for spraying a product during normal operation, and a second spray system that is used to spray cleaning solution during CIP cleaning. The methods may also be suitable for systems that include a spray system that can be configured to draw from two or more storage vessels, for example, one storage vessel that is used to store product in normal operation, and a second storage vessel that is used to store cleaning solution.

Many industrial processes that utilize CIP methods for cleaning experience hard-to-remove soils that require long cleaning times. CIP processes can take several hours to complete, causing undesirable downtime as the production process cannot be operated simultaneously with the CIP process. Many food and beverage soils are particularly difficult to remove if the soil is thermally degraded because the material has been heated during processing. For example, products may have been heated to cook, sterilize (e.g., to pasteurize), condense, or to dry. The term "thermally degraded" is used to refer to material that has been exposed to heat and as a result has undergone changes to the chemical structure of the material, such as denaturing and cross linking reactions of proteins, carbohydrates, fats, and oils. Most food and beverage products include either protein, fat, carbohydrates, or a combination thereof.

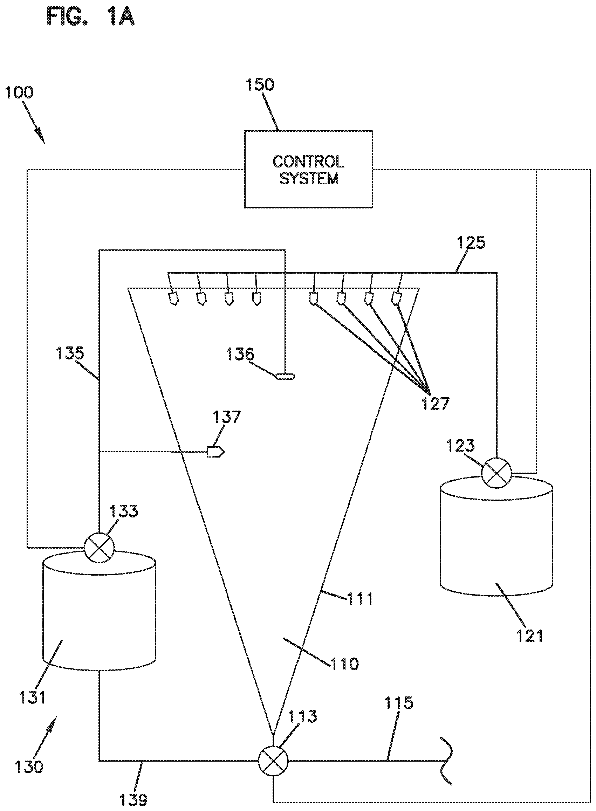

One particularly challenging CIP cleaning application is a large vertical spray dryer used to dry dairy products (e.g., to produce dried milk powder) or starch. Such dryers are often conical in shape and can be as large as 18 to 27 meters (60 to 90 feet) in height and 3.7 to 5.5 meters (12 to 18 feet) in diameter at the top. In particular, spray dryers used to dry dairy may accumulate large amounts of dry, baked-on product that includes protein, fat, and carbohydrates on the inside walls of the dryer chamber. A schematic drawing of a typical spray dryer 100 is shown in FIGURE 1A. The wet product is introduced through spray nozzles 127 at the top of the drying chamber 110, where the product is atomized into small droplets. As the droplets fall down inside the drying chamber 110, hot air (typically about 121°C [250°F]) is counter-flown from the bottom to dry the wet particles. The dried particles are collected at the bottom of the drying chamber and can be removed for further processing (e.g., in a cyclone or fluid bed dryer). However, during the process, some of the product lands and remains on the walls 111 of the chamber 110 rather than falling to the bottom, and over time develops a hard-to-remove layer of baked-on soil.

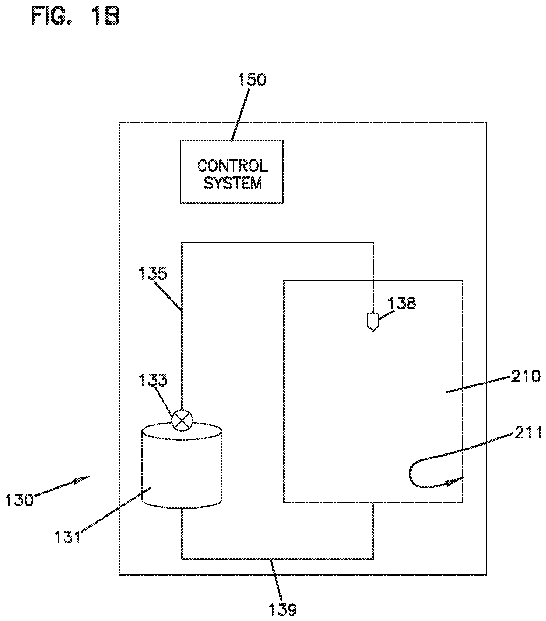

The spray dryer 100 can include a cleaning system 130 that is used for CIP cleaning. A simplified schematic of the cleaning system 130 is shown in FIGURE 1B. A similar cleaning system 130 can be used with other types of equipment, such as other types of dryers (e.g., fluid bed dryers, cone dryers, or drum dryers), tanks, evaporators, heat exchangers, pipes, separators, homogenizers, pasteurizers, cooling towers, cabinet ovens, combi ovens, belt sprays, paper mill equipment, refinery distillation towers, and other process equipment. The cleaning system 130 can include a cleaning fluid supply tank 131 that is connected to spray nozzles 138 by line 135. The spray nozzles 138 can be constructed to spray the cleaning fluid at high pressure to the inside walls 211 of the vessel 210 to clean caked-on soil. The exemplary spray dryer system shown in FIGURE 1A includes spray nozzles 137 on the sides and a central spray nozzle 136 in the middle of the chamber 110.

The cleaning fluid can be supplied to the spray nozzles 136, 137 or 138 at an elevated pressure provided by a pump 133. The pump 133 should be selected to provide a pressure required by the particular spray nozzles. For example, a rotary spray nozzle typically requires a higher pressure than regular spray nozzles. The nozzle configuration can be modified to optimize the nozzles for the selected cleaning solution. Movable nozzles can be utilized to ensure coverage of hard-to reach areas of equipment, such as bends, elbows, or corners.

The cleaning may be done at a temperature of about 37.8°C (100°F) or higher, depending on the soil to be removed. The cleaning system may include a heater to bring the cleaning solutions to the desired temperature.

The spent cleaning fluid from the CIP spray is collected at the bottom and can be circulated back into the supply tank 131 through a recirculation line 139. The spent cleaning fluid can be filtered before reuse. In some embodiments, the recirculation line 139 may further comprise a screen or a filter to remove particulate matter, e.g., soil particles removed by the cleaning fluid.

A typical CIP cycle to clean a dairy spray dryer using existing methods can last as long as 12 to 18 hours, during which a cleaning solution of about 0.5 to 2 % caustic is circulated through the CIP system. Because of the large size of the drying chamber, the CIP system consumes large amounts of water. In some applications, the cleaning solution cannot be effectively recirculated because of the type of soil being removed. For example, soils that include high concentrations of starch (e.g., in a starch spray dryer) cause starch and starch-based reaction products (e.g., gelatinized starch) to accumulate in the cleaning solution so that the cleaning solution cannot be recirculated.

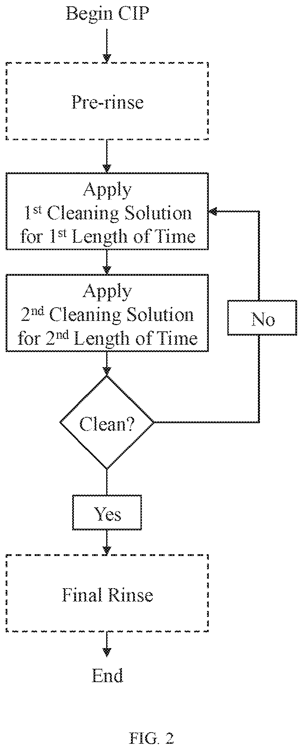

The methods of the present disclosure can be particularly useful for cleaning soils containing proteins, carbohydrates, and/or fats in spray dryers or other equipment. According to an embodiment and generically shown in the flow chart of FIGURE 2, the method includes a CIP cycle of applying a first cleaning solution from a first spray system, applying a second cleaning solution from a second spray system, and repeating the CIP cycle until a desired level of cleaning is achieved. Prior to beginning the CIP cycle, the system (e.g., the product supply tank) is emptied of any product that could be left in it and the dryer or other equipment can be pre-rinsed with water or other solvent. Pre-rinsing done through the product nozzles may also help remove remaining product from the product nozzles. The process can also include any other contacting step in which a rinse, acidic or basic functional fluid, solvent or other cleaning component such as hot water, cold water, etc. can be contacted with the equipment at any step or between steps during the process. The CIP cycle may also include a final rinse step, e.g., with water or a composition comprising an antimicrobial agent, to prepare the system for subsequent food grade production. If the soil load of the re-circulating cleaning solution becomes too high, the supply tank may be drained and re-filled with fresh cleaning solution.

Beneficially, the first cleaning solution can provide a soil disruption effect, making the second cleaning solution more effective. The term "soil disruption effect" is used here to refer to loosening, destruction, and/or displacement of soil on a surface. Without wishing to be bound by theory, it is thought that when the first cleaning solution penetrates a layer of soil, the cleaning action generated by the first cleaning solution disrupts the soil matrix, breaks up the soil layer, and loosens it from the surface. The disrupted soil can then be removed by the use of the second cleaning solution providing higher pressure impingement forces. In some embodiments, the soil disruption effect is brought on by a reaction between active ingredients in the first cleaning solution and the second cleaning solution. In some embodiments, the cleaning action is generated by bubbles or foaming.

According to at least one embodiment, the first cleaning solution can be applied from a first supply tank and the second cleaning solution can be applied from a second supply tank. For example, in some embodiments used to clean a spray dryer, the first cleaning solution is drawn from the product supply tank 121 and sprayed through the product spray nozzles 127 at the top of a spray dryer for a first length of time, and the second cleaning solution is drawn from the CIP supply tank (cleaning fluid supply tank 131 in FIGURE 1A) and sprayed through the CIP cleaning nozzles 136, 137 for a second length of time. The upright spray dryer (shown in FIGURE 1A) lends itself well to the present method because it already includes two sets of spray nozzles. Other types of equipment, such as other dryers, tanks, evaporators, heat exchangers, pipes, separators, homogenizers, pasteurizers, cooling towers, cabinet ovens, combi ovens, belt sprays, paper mill equipment, refinery distillation towers, and other process equipment could be outfitted with a second set of spray nozzles to accommodate the present cleaning method. Alternatively, the spray nozzles can be adapted to draw cleaning solutions from two separate supply tanks.

The first and second cleaning solutions can be independently applied at ambient temperature or at an elevated temperature. The first and second cleaning solutions can also be applied independently at an elevated pressure. For example, if a high pressure CIP cleaning nozzle is used, the solution applied through the nozzle can be applied at a pressure ranging from 0.34 Mpa (50 psi) up to and exceeding 1.0 MPa (150 psi). In some embodiments, the second cleaning solution is applied through CIP cleaning nozzles at a pressure of about 0.69 Mpa to about 3.4 Mpa, or about 1.0 Mpa to about 2.1 Mpa (100 to about 500 psi, or about 150 to about 300 psi).

The product spray nozzles 127 in a typical spray dryer can be non-pressurized and are not necessarily adapted for getting complete coverage of the inside walls 111 of the drying chamber 110. However, counter flow air can optionally be utilized to improve coverage of the walls with the cleaning solution (e.g., the first cleaning solution). The nozzle configuration can also be adapted, or the system can be outfitted with different types of nozzles to achieve a desired cleaning outcome, such as better coverage, high pressure, rotating, or foaming nozzles.

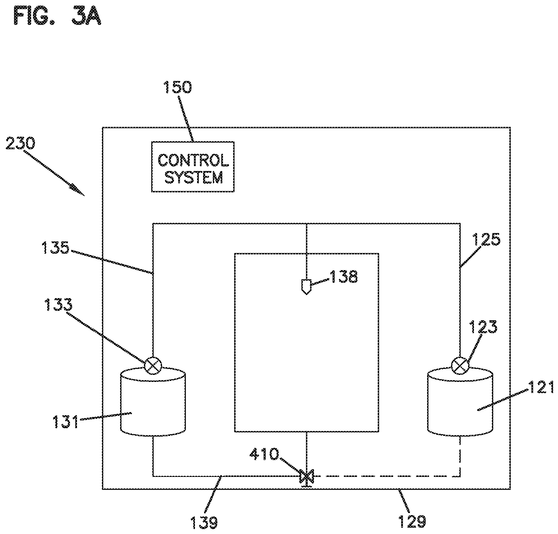

According to an alternative embodiment used in a cleaning system 230 shown in FIGURE 3A, the first cleaning solution is provided in a first supply tank 121 and the second cleaning solution is provided in a second supply tank 131, and each tank is connected to and in fluid communication with the nozzles 138 through lines 125, 135. The system 330 may include a switch 410 (e.g., a switch valve) for switching the supply to the nozzles 138 from the first supply tank 121 to the second supply tank 131 and back. During cleaning, the nozzles 138 can be first supplied with the first cleaning solution from the first supply tank 121 for a first length of time, then with the second cleaning solution from the second supply tank 131 for a second length of time.

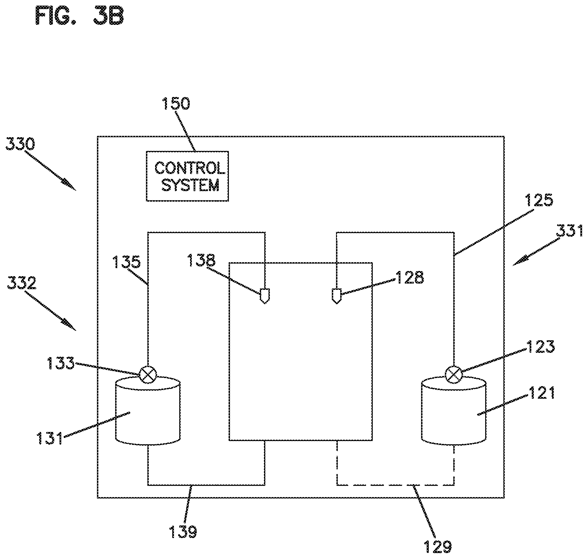

In another alternative embodiment shown in FIGURE 3B, the cleaning system 330 includes two or more separate circuits 331, 332, each with a supply tank 121, 131, pump 123, 133, supply line 125, 135, spray nozzles 128, 138, and optionally recirculation line 129, 139. The first cleaning solution can be provided in the first supply tank 121 of the first cleaning circuit 331, and the second cleaning solution in the second supply tank 131 of the second cleaning circuit 332. In a typical spray dryer system, only the second circuit 332 (usually the CIP circuit) includes a recirculation line 139. Cleaning solution from the first supply tank 121 would be recirculated into the second circuit 332 through the recirculation line 139. In some embodiments, the first circuit 332 also includes a recirculation line 139, and the first and second cleaning solutions can be recirculated into the first supply tank 121.

CIP tanks provided in typical spray dryer systems can be large, up to hundreds of gallons in size. Any chemistry that is included in a cleaning solution in the CIP supply tank gets diluted with a large volume of water, and therefore needs to be included in a substantial amount. Providing the chemistry at a high concentration in the large tank can be cost prohibitive. By providing a cleaning solution in a separate supply tank (i.e., the first supply tank), the solution can be provided at a higher concentration because the delivery flow rate is typically much smaller than the CIP supply tank. The present method provides a cost-effective way to supply a concentrated, heavy duty cleaner for the CIP cycle.

The first and second cleaning solutions can comprise different chemistries, different concentrations, or be the same. In one embodiment, the first cleaning solution has a different and more concentrated chemistry than the second cleaning solution, and is supplied to the nozzles 138 for a shorter length of time than the second cleaning solution. In another embodiment, the first cleaning solution comprises the same chemistry as the second cleaning solution. However, the first cleaning solution may have a higher concentration of active ingredients than the second cleaning solution, or vice versa. The first and second cleaning solutions can also be applied at different temperatures, and one or both of the cleaning solutions may be applied at either ambient or at elevated temperatures. The temperature of each cleaning solution can be adjusted based on the soil to be removed and/or the chemistry in the cleaning solution.

In one embodiment the first and second cleaning solutions have the same chemistry but the first cleaning solution is more concentrated than the second cleaning solution. Used cleaning solution can be collected after spraying, optionally filtered to remove solid particles, and directed into one of the supply tanks, for example, the second supply tank. If the first cleaning solution is more concentrated, and the used solution is collected and directed into the second supply tank, the mixing of the used first cleaning solution with the second cleaning solution in the tank would cause the second cleaning solution to become more concentrated throughout the plurality of cleaning cycles.

In one embodiment the first and second cleaning solutions have different chemistries, and the first cleaning solution may also comprise a higher concentration of active ingredients than the second cleaning solution. If the used first cleaning solution is collected after spraying and optionally filtered and directed into the second supply tank, the components (e.g., the active ingredients) of the first cleaning solution may react with the components (e.g., the active ingredients) of the second cleaning solution and/or may override the components of the second cleaning solution. For example, if one of the first and second cleaning solutions is basic and the other is acidic, the acid and base can react together when mixed. In such a case, the second cleaning solution can be replenished during or after the cleaning procedure.

In certain embodiments, a third, fourth, or subsequent cleaning solution can be used. For example, in a first part of the cleaning cycle, first and second cleaning solutions are applied, and after applying the first and second cleaning solutions to the surface, the supply tanks can be emptied and provided with third and/or fourth cleaning solutions to be applied in a second part of the cleaning cycle. Alternatively, additional supply tanks can be provided, and the third, fourth, or consecutive cleaning solutions can be provided in the additional tanks.

The chemistry in the cleaning solutions can be selected based on the soil to be removed. For example, a combination of peroxide and surfactant followed by alkali can be effective in cleaning soils that contain protein, carbohydrates, and/or starch. Soils containing fats can benefit from adding a solvent to the cleaning solution. Enzymes can be utilized to clean soils containing, for example, protein or starch.

In the case of the dairy spray dryer (FIGURE 1A), a typical CIP solution is a relatively dilute caustic that is sprayed at high volume to clean the chamber 110. However, according to an embodiment of the present method, because the product spray nozzles 127 are connected to a product supply tank 121, a different and advantageously more concentrated chemistry can be applied through the product spray nozzles 127. In one exemplary embodiment, a concentrated pre-treatment chemistry is applied from the product supply tank 121 through the product spray nozzles 127 onto the walls 111 of the dryer chamber, and a more dilute cleaning solution (e.g., a CIP solution comprising 0.1 to 2 % caustic) is then applied from the cleaning fluid supply tank 131 through the CIP spray nozzles 136, 137. The cycle of pre-treatment and CIP application can be repeated multiple times, and can optionally be followed by a clean water rinse.

### TIMING

The present method includes preferably a plurality of application or cleaning cycles, where each cycle comprises applying the first cleaning solution for a first length of time and applying the second cleaning solution for a second length of time. The plurality of application cycles can be any suitable number of cycles, such as 3 to 200 cycles, 5 to 150 cycles, 10 to 100 cycles, 20 to 75 cycles, or 30 to 60 cycles.

The length of time of applying the first and second cleaning solutions can be adjusted based on the chemistries used in each cleaning solution, the concentration of the chemistry used, and on the type and amount of soil that needs to be removed. In some embodiments, the first length of time is shorter than the second length of time. For example, the first cleaning solution can be applied for about 30 s to about 20 min, about 45 s to about 15 min, about 1 to about 10 min, about 90 s to about 5 min, or any suitable length of time. In some embodiments the first length of time is at least 20 s, 30 s, 40 s, 50 s, 60 s, 90 s, 2 min, 2 min 30 s, 3 min, 4 min, or 5 min or longer. In some embodiments, the first length of time is no more than 60 min, 30 min, 25 min, 20 min, 15 min, 10 min, 8 min, 7 min, 6 min, 5 min, 4 min, 3 min, 2 min 30 s, or 2 min.

The method may optionally include a soak time (i.e., a delay) between the application of the first cleaning solution and the second cleaning solution. The soak time may be from 0 to about 5 min, or from 0 to about 3 min long. In some embodiments, there is essentially no delay between the application of the first cleaning solution and the second cleaning solution, except for possibly a minimal delay caused by the stopping of one spray system and starting of another.

The second length of time can be any length of time as adjusted based on the chemistry and the soil to be removed. The second length of time can be about 1 to 150 min, about 1 to 120 min, about 1 to 90 min, about 1 to 60 min, about 2 to 45 min, about 3 to 30 min, about 5 to 20 min, or about 10 to 18 min.

The cleaning cycle can be repeated any suitable number of times, such as 3 to 200 times, 5 to 150 times, or 10 to 100 times. In one exemplary embodiment, the first length of time is about 3 to 5 min, and the second length of time is about 13 to 17 min, and the cycle is repeated about 40-50 times. The cleaning cycles follow each other in quick succession, such that the next cleaning cycle begins essentially immediately after the previous cleaning cycle is over, or with minimal lag time as allowed by operation of the equipment. For example, the lag time may be up to about a few minutes (e.g., about 1, 2, 3, 4, 5, or 6 minutes). In some cases, there is not lag time, or the lag time is virtually nonexistent (i.e., about 0 minutes, or less than 30 seconds or less than 60 seconds). The plurality of cleaning cycles (e.g., 3 to 200 cycles, 5 to 150 cycles, or 10 to 100 cycles) form one instance of CIP cleaning, where normal use of the equipment (e.g., production) is stopped for the duration of the cleaning and is not started until the cleaning is finished.

### COMPOSITION

Any suitable cleaning chemistries can be used to provide the first and second cleaning solutions used in the method. The first and second cleaning solutions can comprise the same or different chemistries, and can have the same or different concentrations. In some embodiments, the first cleaning solution is different from the second cleaning solution and/or is more concentrated. For example, the first cleaning solution can comprise active ingredients at a concentration of up to 20 wt-%, 18 wt-%, 16 wt-%, 15 wt-%, 14 wt-%, 13 wt-%, 12 wt-%, 11 wt-%, or up to 10 wt-%. In at least some of the embodiments, the first cleaning solution comprises at least 2 wt-%, 3 wt-%, 4 wt-%, 5 wt-%, 6 wt-%, 7 wt-%, 8 wt-%, 9 wt-%, or at least 10 wt-% of active ingredients. The term "active ingredients" is used here to refer to ingredients that actively contribute to the cleaning, as opposed to ingredients that are used to dilute or otherwise formulate (e.g., thicken, stabilize, colorize, preserve, etc.) the composition. In some embodiments, the second cleaning solution comprises from 0.1 to 8 wt-%, from 0.2 to 6 wt-%, from 0.2 to 5 wt-%, from 0.2 to 4 wt-%, from 0.3 to 3 wt-%, from 0.4 to 2.5 wt-%, or from 0.5 to 2 wt-% of active ingredients. For example, the second cleaning solution can be a CIP cleaning solution including about 0.1 to 5 wt-%, or about 0.5 to 2 wt-% caustic (NaOH) in water.

In some embodiments, the first cleaning solution comprises an oxidizing agent or an oxidizer, such as a peroxide, peroxyacids, or other peroxygen compound. The resulting solution is particularly effective against protein and starch soils. Further, reaction of the oxygen compounds with the soil, especially when combined with an alkaline source, creates vigorous mechanical action on and within the soil, which enhances removal of the soil.

Suitable oxidants include chlorites, bromine, bromates, bromine monochloride, iodine, iodine monochloride, iodates, permanganates, nitrates, nitric acid, borates, perborates, and gaseous oxidants such as ozone, oxygen, chlorine dioxide, chlorine, and derivatives thereof. Peroxygen compounds, which include peroxides and various percarboxylic acids, including percarbonates, are suitable.

Peroxycarboxylic (or percarboxylic) acids generally have the formula R(CO₃H)ₙ, where, for example, R is an alkyl, arylalkyl, cycloalkyl, aromatic, or heterocyclic group, and n is one, two, or three, and named by prefixing the parent acid with "peroxy." The R group can be saturated or unsaturated as well as substituted or unsubstituted. In medium chain peroxycarboxylic (or percarboxylic) acids R is a C₅-C₁₁ alkyl group, a C₅-C₁₁ cycloalkyl, a C₅-C₁₁arylalkyl group, C₅-C₁₁ aryl group, or a C₅-C₁₁ heterocyclic group; and n is one, two, or three. In short chain fatty acids, R is C₁-C₄ and n is one, two, or three.

Examples of peroxycarboxylic acids include peroxypentanoic, peroxyhexanoic, peroxyheptanoic, peroxyoctanoic, peroxynonanoic, peroxyisononanoic, peroxydecanoic, peroxyundecanoic, peroxydodecanoic, peroxyascorbic, peroxyadipic, peroxycitric, peroxypimelic, or peroxysuberic acid, mixtures thereof, and the like.

Branched chain peroxycarboxylic acids include peroxyisopentanoic, peroxyisononanoic, peroxyisohexanoic, peroxyisoheptanoic, peroxyisooctanoic, peroxyisononanoic, peroxyisodecanoic, peroxyisoundecanoic, peroxyisododecanoic, peroxyneopentanoic, peroxyneohexanoic, peroxyneoheptanoic, peroxyneooctanoic, peroxyneononanoic, peroxyneodecanoic, peroxyneoundecanoic, peroxyneododecanoic, mixtures thereof, and the like.

Typical peroxygen compounds may include hydrogen peroxide (H₂O₂), peracetic acid, peroctanoic acid, a persulfate, a perborate, or a percarbonate.

The amount of oxidant in the pre-treatment solution may be at least 0.01 wt-% and less than 2 wt-%. In some embodiments, the cleaning solution comprises from about 0.01 to 1 wt-%; about 0.05 to about 0.50 wt-%; about 0.1 to about 0.4 wt-%, or about 0.2 to about 0.3 wt-% of oxidant. If the composition also comprises an acid, suitable ratios of oxidant to acid are generally from 1:1 to 1:50, from 1:2 to 1:40, from 1:3 to 1:30, from 1:4 to 1:25, or from 1:5 to 1:20. In an exemplary embodiment, the cleaning solution comprises 0.25 wt-% to 10 wt-% phosphoric acid and 50-5000 ppm (0.005 wt-% to 0.5 wt-%) hydrogen peroxide, or in particular, about 0.75 wt-% phosphoric acid and about 500 ppm (0.05 wt-%) hydrogen peroxide (a ratio of 1:15 of oxidant:acid).

Suitable acids include phosphoric acid, nitric acid, hydrochloric acid, sulfuric acid, acetic acid, citric acid, lactic acid, formic acid, glycolic acid, methane sulfonic acid, sulfamic acid, and mixtures thereof. When the acid is used in combination with an oxidant, the cleaning solution can comprise about 0.1 to about 12 wt-%, about 0.2 to about 10 wt-%, about 0.3 to about 8.0 wt-%, about 0.5 to about 6.0 wt-%, about 0.8 to about 4.0 wt-%, about 1.0 to about 3.0 wt-%, or about 1.5 to about 2.5 wt-% of acid.

In an embodiment where the first cleaning solution contains hydrogen peroxide and the second cleaning solution contains sodium hydroxide, the cleaning cycle of first cleaning solution followed by the second cleaning solution creates oxygen bubbles formed by the destruction of the hydrogen peroxide. The oxygen bubbles can be effective in breaking down caked-on soil, such as soil formed in a spray dryer used to produce dried milk or starch.

According to an embodiment, the first cleaning solution may include a gas generating solution that generates carbon dioxide or another gas on or in the soil to provide the soil disruption effect. The gas generating solution can comprise at least a first gas generating compound and a second gas generating compound, where the first and second gas generating compounds react together to generate gas. For example, the gas generating solution can comprise a source of carbon-dioxide-producing salt and an acid. Exemplary gases other than carbon dioxide that can be generated by the gas generating solution include chlorine dioxide, chlorine, and oxygen.

Suitable carbon-dioxide-producing salts include, for example, carbonate salt, bicarbonate salt, percarbonate salt, a sesquicarbonate salt, and mixtures thereof. The carbon-dioxide-producing salt can be a carbonate, bicarbonate, percarbonate, or sesquicarbonate salt of sodium, potassium, lithium, ammonium, calcium, magnesium, or propylene. In some embodiments, the salt is selected from sodium carbonate, sodium bicarbonate, sodium percarbonate, sodium sesquicarbonate; potassium carbonate, potassium bicarbonate, potassium percarbonate, potassium sesquicarbonate; lithium carbonate, lithium bicarbonate, lithium percarbonate, lithium sesquicarbonate; ammonium carbonate, ammonium bicarbonate; calcium carbonate, magnesium carbonate, propylene carbonate, and mixtures thereof. The cleaning solution can comprise about 0.1 to about 7.0 wt-%, about 0.2 to about 5.0 wt-%, or about 0.3 to about 3.0 wt-% of the carbon-dioxide-producing salt.

Gas generating solutions that produce a chlorine containing gas (e.g., chlorine dioxide) can include, for example, sodium hypochlorite and an acid. In some embodiments, the gas generating solution produces two or more different gases, e.g., carbon dioxide and chlorine containing gas. Such a gas generating solution may contain, for example, a carbon-dioxide-producing salt (e.g., a carbonate salt) and sodium hypochlorite.

The second gas generating compound can be any suitable compound that is capable of reacting with the first gas generating compound to generate gas. For example, the second gas generating compound may be an acid. Exemplary acids include phosphoric acid, nitric acid, hydrochloric acid, sulfuric acid, acetic acid, citric acid, lactic acid, formic acid, glycolic acid, methane sulfonic acid, sulfamic acid, and mixtures thereof. The amount of acid can be adjusted based on various considerations, such as the acid selected, the amount and type of first gas generating compound, and the soil to be removed. The cleaning solution can comprise about 0.1 to about 10 wt-%, about 0.2 to about 8.0 wt-%, about 0.3 to about 6.0 wt-%, about 0.5 to about 5 wt-%, about 0.8 to about 4 wt-%, about 1.0 to about 3.0 wt-%, or about 1.5 to about 2.5 wt-% of acid. In an exemplary embodiment, the acid comprises a strong mineral acid, e.g., phosphoric, nitric, or sulfuric acid or a combination thereof, and is present at about 1.0, 1.5, 2.0, 2.5, or 3.0 wt-%.

According to some embodiments, the first and/or second cleaning solution comprises a catalyst. Useful catalysts include, for example, transition metal complexes, (e.g., complexes of manganese, molybdenum, chromium, copper, iron, or cobalt). Exemplary sources of manganese ions include, but are not limited to, manganese (II) sulfate, manganese (II) chloride, manganese (II) oxide, manganese (III) oxide, manganese (IV) oxide, manganese (II) acetate and combinations thereof. An exemplary source of iron includes iron gluconate. In some embodiments, the cleaning can be more efficient at a lower temperature (e.g., at temperatures of between 37.8 °C - 54.4 °C [100 °F - 130°F),] and including a catalyst in the cleaning solution may help induce formation of gas bubbles. For example, when using a peroxide solution to clean starch residue, iron gluconate catalyst can be used to accelerate degradation of the peroxide compounds at lower temperatures to increase generation of gas bubbles.

In some embodiments, the first cleaning solution does not contain a gas generating composition. In such solutions, the cleaning effect can be achieved by, for example, a combination of one or more solvents and one or more surfactants, or by using one or more enzymes. In some embodiments, the first cleaning solution contains an enzyme and /or a surfactant, and the second cleaning solution contains a gas generating composition.

In one exemplary embodiment, a dual functioning surfactant can be used. A cleaning solution that comprises a nonionic surfactant can be sprayed at a temperature that is below the cloud point of the nonionic surfactant, causing the cleaning solution to foam and to better adhere to the surface of the equipment being cleaned, thus increasing contact time between the surface and the cleaning solution. A subsequent cleaning solution (e.g., second cleaning solution) can then be applied at a temperature that is above the cloud point of the nonionic surfactant, changing the behavior of the nonionic surfactant to a de-foamer.

### OTHER COMPONENTS

The first and second cleaning solutions (collectively "cleaning solutions") may also comprise alkaline components, surfactants, solvents, builders, and additional components. Suitable alkaline components include any alkaline components typically used in cleaning compositions, including NaOH, KOH, triethanol amine (TEA), diethanol amine (DEA), monoethanolamine (MEA), carbonates, bicarbonates, percarbonates, sesquicarbonates, morpholine, sodium metasilicate, potassium silicate, etc.

Suitable surfactants that can be used in the cleaning solutions include anionic, cationic, nonionic, and zwitterionic surfactants. The cleaning compositions may comprise about 0.01 to about 3 wt-%, about 0.05 to about 2 wt-%, or about 0.1 to about 0.5 wt-% of surfactants. The surfactant may be a combination of surfactants. In an embodiment, at least one of the surfactants is nonionic.

### Nonionic Surfactants

In some embodiments, the surfactant comprises a nonionic surfactant. Nonionic surfactants improve soil removal and can reduce the contact angle of the solution on the surface being treated.

Examples of suitable nonionic surfactants include alkyl-, aryl-, and arylalkyl-, alkoxylates, alkylpolyglycosides and their derivatives, amines and their derivatives, and amides and their derivatives. Additional useful nonionic surfactants include those having a polyalkylene oxide polymer as a portion of the surfactant molecule. Such nonionic surfactants include, for example, chlorine-, benzyl-, methyl-, ethyl-, propyl-, butyl- and other like alkyl-capped polyoxyethylene and/or polyoxypropylene glycol ethers of fatty alcohols; polyalkylene oxide free nonionics such as alkyl polyglycosides; sorbitan and sucrose esters and their ethoxylates; alkoxylated ethylene diamine; carboxylic acid esters such as glycerol esters, polyoxyethylene esters, ethoxylated and glycol esters of fatty acids, and the like; carboxylic amides such as diethanolamine condensates, monoalkanolamine condensates, polyoxyethylene fatty acid amides, and the like; and ethoxylated amines and ether amines and other like nonionic compounds. Silicone surfactants can also be used. Nonionic surfactants having a polyalkylene oxide polymer portion include nonionic surfactants of C6-C24 alcohol ethoxylates having 1 to about 20 ethylene oxide groups; C6-C24 alkylphenol ethoxylates having 1 to about 100 ethylene oxide groups; C6-C24 alkylpolyglycosides having 1 to about 20 glycoside groups; C6-C24 fatty acid ester ethoxylates, propoxylates or glycerides; and C4-C24 mono or dialkanolamides.

Examples of non-foaming, low foaming, or defoaming nonionic surfactants include block polyoxypropylene-polyoxyethylene polymeric compounds with hydrophobic blocks on the outside (ends) of the molecule, and nonionic surfactants modified by "capping" or "end blocking" terminal hydroxyl groups by reaction with a small hydrophobic molecule or by converting terminal hydroxyl groups to chloride groups. Other examples of non-foaming nonionic surfactants include alkylphenoxypolyethoxyalkanols; polyalkylene glycol condensates; defoaming nonionic surfactants having a general formula Z[(OR)ₙOH]_{z} where Z is alkoxylatable material, R is a radical, n is 10-2,000, and z is determined by the number of reactive oxyalkylatable groups; and conjugated polyoxyalkylene compounds.

### Anionic Surfactants

Anionic surfactants are useful as detersive surfactants, but also as gelling agents or as part of a gelling or thickening system, as solubilizers, and for hydrotropic effect and cloud point control. The composition may include one or more anionic surfactants. Suitable anionic surfactants for the present composition include: carboxylic acids and their salts, such as alkanoic acids and alkanoates, ester carboxylic acids (e.g. alkyl succinates), ether carboxylic acids, and the like; phosphoric acid esters and their salts; sulfonic acids and their salts, such as isethionates, alkylaryl sulfonates, alkyl sulfonates, sulfosuccinates; and sulfuric acid esters and their salts, such as alkyl ether sulfates, alkyl sulfates, and the like.

### Cationic Surfactants

Examples of suitable cationic surfactants include amines, such as alkylamines and their salts, alkyl imidazolines, ethoxylated amines, and quaternary ammonium compounds and their salts. Other cationic surfactants include sulfur (sulfonium) and phosphorus (phosphonium) based compounds that are analogous to the amine compounds.

### Amphoteric and Zwitterionic Surfactants

Amphoteric and zwitterionic surfactants include derivatives of secondary and tertiary amines, derivatives of heterocyclic secondary and tertiary amines, or derivatives of quaternary ammonium, quaternary phosphonium or tertiary sulfonium compounds. The ammonium, phosphonium, or sulfonium compounds can be substituted with aliphatic substituents, e.g., alkyl, alkenyl, or hydroxyalkyl; alkylene or hydroxy alkylene; or carboxylate, sulfonate, sulfate, phosphonate, or phosphate groups. Betaine and sultaine surfactants are exemplary zwitterionic surfactants for use in the present composition.

### Builders

The cleaning solutions may also include one or more builders. Builders include chelating agents (chelators), sequestering agents (sequestrants), detergents, and the like. Builders can be used to stabilize the composition or solution. Examples of suitable builders include phosphonic acids and phosphonates, phosphates, aminocarboxylates and their derivatives, pyrophosphates, polyphosphates, ethylenediamine and ethylenetriamine derivatives, hydroxyacids, and mono-, di-, and tri-carboxylates and their corresponding acids. Other builders include aluminosilicates, nitroloacetates and their derivatives, and mixtures thereof. Still other builders include aminocarboxylates, including salts of ethylenediaminetetraacetic acid (EDT A), hydroxyethylenediaminetetraacetic acid (HEDTA), and diethylenetriaininepentaacetic acid. Preferred builders are water soluble. Particularly preferred builders include EDTA (including tetra sodium EDTA), TKPP (tripotassium polyphosphate), PAA (polyacrylic acid) and its salts, phosphonobutane carboxylic acid, and sodium gluconate.

The cleaning solutions may comprise about 0.05 to about 7 wt-%, about 0.1 to about 5 wt-%, about 0.2 to about 4 wt-%, about 0.3 to about 3 wt-%, or about 0.5 to about 2 wt-% of a builder.

### Solvents

The cleaning solutions may include one or more organic solvents. Suitable solvents include organic solvents, such as, esters, ethers, ketones, amines, mineral spirits, aromatic solvents, non-aromatic solvents, and nitrated and chlorinated hydrocarbons. Preferred solvents include water soluble glycol ethers. Examples of glycol ethers include dipropylene glycol methyl ether, diethylene glycol methyl ether, propylene glycol methyl ether, and ethylene glycol monobutyl ether, commercially available as DOWANOL^{®} DPM, DOWANOL^{®} DM, DOWANOL^{®} PM, and DOWANOL^{®} EB, respectively, from Dow Chemical Company, Midland, MI. In certain embodiments, preferred solvents are non-flammable.

### Enzymes

Enzymes can be used in the cleaning solutions to break up soils, such as starch, protein, or oil based soils. Exemplary enzymes include proteases, amylases, lipases, and other suitable enzymes. The composition can be tailored to the type of soil to be cleaned so that, for example, protein-based soils are targeted with proteases, starch-based soils with amylases, and oil-based soils with lipases.

The solutions may comprise additional components to provide desired properties or functionality. For example, the solutions can include chelating or sequestering agents, sanitizers or antimicrobial agents, dyes, rheological modifiers (e.g., gelling agents, thickeners, and the like), pH modifiers (acids or bases), preservatives, processing aids, corrosion inhibitors, or other functional ingredients.

The pH of the cleaning solutions can be adjusted based on the choice of acid cleaning or alkaline cleaning for various soil types. In some embodiments, the first cleaning composition has a pH of 1.5 to 14. For example, if an alkaline cleaning composition is used, the pH may be in the range from 7 to 14, from 8 to 13, or from 9 to 12. Exemplary alkaline cleaning solutions include solutions comprising hydroxides or carbonates or other alkaline agents. In an embodiment, an alkaline first cleaning solution that contains a carbonate (e.g., potassium carbonate) and has a pH above 7 can be followed up by a second cleaning solution that is acidic (pH less than 7) that neutralizes the first cleaning solution and generates CO₂ bubbles for improved mechanical cleaning action. If the used alkaline solution is directed into the second supply tank and mixed with the second cleaning solution there, the pH of the second cleaning solution can be adjusted by adding more acid throughout the process to maintain its acidic pH. If an acidic cleaning composition is used, the pH may be in less than 7, less than 6.5, less than 6, less than 5.5, less than 5, less than 4, or less than 3. In some embodiments the pH is between 1 and 6, or between 1.5 and 5.

### EXAMPLES

### Example 1

The CIP method can be used to clean a large conical dairy spray dryer as shown in FIGURE 1. Various combinations of cleaning solutions can be prepared as shown in TABLE 1. In the table, each first cleaning solution is denoted "A" and each second cleaning solution is denoted "B." Each cleaning solution is prepared and mixed with water at the noted inclusion rate to produce a use solution.

**TABLE 1. Preparation of Cleaning Solutions.**

| | **Combination 1** | | **Combination 2** | | **Combination 3** | |
|---|---|---|---|---|---|---|
| **Component** | **A (%)** | **B (%)** | **A (%)** | **B (%)** | **A (%)** | **B (%)** |
| Deionized Water | 21.40 | 47.33 | 34.50 | | | |
| Softened Water | | | | 70.00 | | 41.08 |
| Sodium Hydroxide (50 %) | | 46.00 | | 10.00 | | |
| Potassium Carbonate (40 %) | | | | | 100.00 | |
| Ferric Sulfate 9 Mole Hydrate | | 0.42 | | 5.00 | | |
| Gluconic Acid (50 %) | | 2.00 | | 15.00 | | |
| Nitric Acid (67.2 %) | | | | | | 56.85 |
| Phosphoric Acid (75 %) | | | | | | 2.07 |
| Hydrogen Peroxide (50 %) | 68.00 | | 65.00 | | | |
| Sodium Cumene Sulfonate | 3.80 | | | | | |
| Polyacrylic Acid Sodium Salt | | 2.00 | | | | |
| Hydroxyethylene diphosphonic Acid (60%) | 0.50 | 1.00 | | | | |
| Phosphonobutanetricarboxylic Acid (50%) | | 1.25 | | | | |
| Surfactant (DEHYPON^{Ⓡ}) | 2.00 | | | | | |
| Surfactant (STEPAN^{Ⓡ}) | | | 0.50 | | | |
| Inclusion rate (%) | 2.0-5.0 | 0.5-1.0 | 2.0-5.0 | 0.5-1.0 | 0.5-1.0 | 2.0-4.0 |

The various compositions (A/B) can also be combined so that the cleaning solution A of Combination 1 can be combined with the cleaning solution B of any Combination 2 or 3; cleaning solution A of Combination 2 can be combined with cleaning solution B of Combination 1 or 3, and cleaning solution A of Combination 3 can be combined with cleaning solution B of Combination 1 or 2.

The resulting use solution concentrations are shown in TABLE 2.

**TABLE 2. Use Solutions**

| | **Combination 1** | | **Combination 2** | | **Combination 3** | |
|---|---|---|---|---|---|---|
| **Component** | **A (%)** | **B (%)** | **A (%)** | **B (%)** | **A (%)** | **B (%)** |
| Sodium Hydroxide | | 0.12-0.23 | | 0.025-0.05 | | |
| Potassium Carbonate | | | | | 0.2-0.4 | |
| Ferric Sulfate 9 Mole Hydrate | | 0.0021-0.0042 | | 0.0025-0.0050 | | |
| Gluconic Acid | | 0.005-0.01 | | 0.038-0.075 | | |
| Nitric Acid | | | | | | 0.76-1.53 |
| Phosphoric Acid | | | | | | 0.31-0.62 |
| Hydrogen Peroxide | 0.68-1.70 | | 0.65-1.63 | | | |
| Sodium Cumene Sulfonate | 0.076-0.19 | | | | | |
| Polyacrylic Acid Sodium Salt | | 0.01-0.02 | | | | |
| Hydroxyethylene diphosphonic Acid | 0.006-0.015 | 0.003-0.006 | | | | |
| Phosphonobutanetricarboxylic Acid | | 0.0031-0.0063 | | | | |
| Surfactant (DEHYPON^{Ⓡ}) | 0.04-0.10 | | | | | |
| Surfactant (STEPAN^{Ⓡ}) | | | 0.01-0.025 | | | |

The cleaning cycle is started by emptying the product supply tank of any product, pre-rinsing the dryer with water through the product spray nozzles, filling the product supply tank with the first cleaning solution, delivering the first cleaning solution (A) from the product supply tank and applying through product spray nozzles at about 10 m³/h (45 gal/min) for about 3 minutes. The second cleaning solution (B) is then delivered from a CIP supply tank and applied through CIP spray nozzles, at about 22.7 m3/h (100 gal/min) and about 0.41 MPa (60 psi) for about 15 minutes. Both cleaning solutions are recirculated back in to the CIP supply tank. The cycle is repeated until a desired level of cleanliness is achieved. It is anticipated that the total cleaning time (the total duration of the plurality of cleaning cycles) is less than 10 hours, as compared to the typical 12-18 hours using a conventional CIP method.

In other embodiments, the first cleaning solution (A) is applied for at least 20 s, 30 s, 40 s, 50 s, 60 s, 90 s, 2 min, 2 min 30 s, 3 min, 4 min, or 5 min or longer, and/or no more than 60 min, 30 min, 25 min, 20 min, 15 min, 10 min, 8 min, 7 min, 6 min, 5 min, 4 min, 3 min, 2 min 30 s, or 2 min. The first cleaning solution (A) may be allowed to soak for 0 to about 5 min, or from 0 to about 3 min. The second cleaning solution (B) is applied for about 1 to 150 min, about 1 to 120 min, about 1 to 90 min, about 1 to 60 min, about 2 to 45 min, about 3 to 30 min, about 5 to 20 min, or about 10 to 18 min. The cleaning cycle (A +B) can be repeated any suitable number of times, such as 3 to 200 times, 5 to 150 times, 10 to 100 times, or 40-50 times.

In other embodiments, the cleaning method is used to clean other types of equipment, such as other types of dryers, ovens, tanks, cooling towers, or conveyor belts.

### Example 2

The cleaning method was tested on dried milk powder soil. Solid cakes of test soil (75 g each) were prepared from skim milk powder in test trays by adding 5 % of water to the skim milk power and drying the mixture for 8 hours at 100 °C. The test soils were treated in a pilot scale Clean-In-Place (CIP) chamber to simulate cleaning conditions encountered in typical dairy product dryers.

The test sample was treated with a pretreatment solution (cleaning solution "A") delivered via atomizing nozzles for 10 minutes. Application through the atomizing nozzles simulated application through existing product delivery spray nozzles in a dryer. The pretreatment solution was allowed to penetrate and act for another 10 minutes before washing. The pretreatment composition is shown in TABLE 3A. The control did not receive a pretreatment.

**TABLE 3A. Pretreatment Composition (cleaning solution "A")**

| Component | Concentrate (%) | Use Solution (%) |
|---|---|---|
| Deionized Water | 77.50 | 3.88 |
| Hydroxyethylene diphosphonic acid (60%) | 0.50 | 0.03 |
| Hydrogen Peroxide (50%) | 20.00 | 1.00 |
| Surfactant (DF-12) | 2.00 | 0.10 |

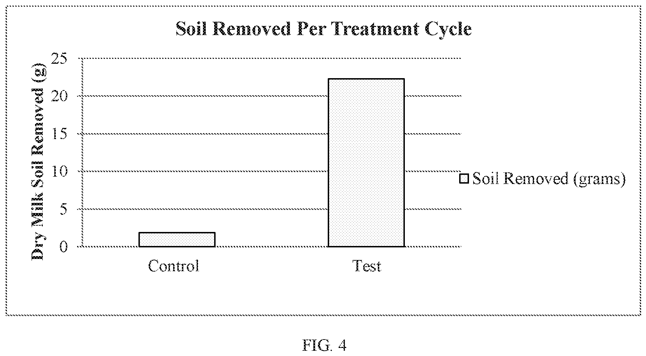

Both the test sample and control were washed simultaneously in the CIP chamber for 45 minutes with 1.5 % NaOH solution (cleaning solution "B") at 65 °C. The trays were removed, rinsed, and weighed. The results are shown in TABLE 3B and FIGURE 4.

**TABLE 3B. Soil Removal**

| Sample | Soil Removed (g) |
|---|---|
| Test (cleaning solution A +B) | 22.3 |
| Control (cleaning solution B only) | 1.9 |

The results achieved with the control matched those observed in real-world CIP of dairy dryer soils, which are typically very challenging to remove. It was observed that application of the pretreatment composition increased the soil removal dramatically as compared to the NaOH alone.

While certain embodiments of the invention have been described, other embodiments may exist. While the specification includes a detailed description, the invention's scope is indicated by the following claims. The specific features and acts described above are disclosed as illustrative aspects and embodiments of the invention.

## Claims

1. A method for cleaning a piece of equipment in place, the method comprising a plurality of cleaning cycles, wherein the plurality of cleaning cycles comprises three or more cleaning cycles, and wherein each cleaning cycle comprises:
(a) applying a first cleaning solution from a first supply tank (**121**) through a first set of nozzles (**128**); and
(b) applying a second cleaning solution from a second supply tank (**131**) through a second set of nozzles (**138**).

2. The method of claim 1, wherein the piece of equipment is selected from a dryer, a tank, a cooling tower, an oven, or a belt.

3. The method of any one of claims 1 or 2, wherein the piece of equipment comprises a spray dryer (**100**).

4. The method of any one of claims 1-3, wherein step (a) comprises a first length of time, and step (b) comprises a second length of time that is longer than the first length of time.

5. The method of claim 4, wherein the first length of time is from about 20 s to about 10 min and wherein the second length of time is from about 1 min to about 60 min.

6. The method of any one of claims 1-5, wherein the plurality of cleaning cycles comprises from 5 to 150 cycles, preferably 10 to 100 cycles.

7. The method of any one of claims 1-6, wherein the first set of nozzles (**128**) consists of non-pressurized nozzles and wherein the second set of nozzles (**138**) comprises a high pressure nozzle.

8. The method of any one of claims 1-7, wherein the first and second cleaning solutions are recirculated into the second supply tank (**131**).

9. The method of any one of claims 1-8, wherein the first and second cleaning solutions comprise active ingredients, and wherein the first cleaning solution comprises active ingredients at a higher concentration than the second cleaning solution.

10. The method of claim 9, wherein the concentration of the active ingredients in the first cleaning solution is between about 4 and about 20 wt-%.

11. The method of any one of claims 1-10, wherein the first cleaning solution comprises one or more peroxygen compounds.

12. The method of claim 11, wherein the peroxygen compound is hydrogen peroxide, a peroxycarboxylic acid, a persulfate, a perborate, a percarbonate, or a mixture thereof.

13. The method of any one of claims 1-12, wherein the first cleaning solution comprises an acid and/or a gas forming agent.

14. The method of any one of claims 1-13, wherein the first cleaning solution comprises a gas forming agent and wherein the gas forming agent forms carbon dioxide or oxygen.

15. The method of any one of claims 1-14, wherein the second cleaning solution comprises a metal hydroxide.

16. The method of any one of claims 1-15, wherein one or both of the first and second cleaning solutions comprise a surfactant, a builder and/or a solvent.

## Patentansprüche

1. Verfahren zum Reinigen eines Ausrüstungsgegenstands an Ort und Stelle, wobei das Verfahren mehrere Reinigungszyklen umfasst, wobei die mehreren Reinigungszyklen drei oder mehr Reinigungszyklen umfassen und wobei jeder Reinigungszyklus Folgendes umfasst:
(a) Aufbringen einer ersten Reinigungslösung aus einem ersten Vorratstank (**121**) durch einen ersten Satz von Düsen (**128**); und
(b) Aufbringen einer zweiten Reinigungslösung aus einem zweiten Vorratstank (**131**) durch einen zweiten Satz von Düsen (**138**).

2. Verfahren nach Anspruch 1, wobei der Ausrüstungsgegenstand aus einem Trockner, einem Tank, einem Kühlturm, einem Ofen oder einem Band ausgewählt ist.

3. Verfahren nach einem der Ansprüche 1 oder 2, wobei der Ausrüstungsgegenstand einen Sprühtrockner (100) umfasst.

4. Verfahren nach einem der Ansprüche 1-3, wobei Schritt (a) eine erste Zeitdauer umfasst und Schritt (b) eine zweite Zeitdauer umfasst, die länger als die erste Zeitdauer ist.

5. Verfahren nach Anspruch 4, wobei die erste Zeitdauer von etwa 20 s bis etwa 10 min beträgt und wobei die zweite Zeitdauer von etwa 1 min bis etwa 60 min beträgt.

6. Verfahren nach einem der Ansprüche 1-5, wobei die mehreren Reinigungszyklen von 5 bis 150 Zyklen, vorzugsweise 10 bis 100 Zyklen, umfassen.

7. Verfahren nach einem der Ansprüche 1-6, wobei der erste Satz von Düsen (128) aus drucklosen Düsen besteht und wobei der zweite Satz von Düsen (138) eine Hochdruckdüse umfasst.

8. Verfahren nach einem der Ansprüche 1-7, wobei die erste und die zweite Reinigungslösung in den zweiten Vorratstank (**131**) rezirkuliert werden.

9. Verfahren nach einem der Ansprüche 1-8, wobei die erste und die zweite Reinigungslösung Wirkstoffe umfassen und wobei die erste Reinigungslösung Wirkstoffe in einer höheren Konzentration als die zweite Reinigungslösung umfasst.

10. Verfahren nach Anspruch 9, wobei die Konzentration der Wirkstoffe in der ersten Reinigungslösung zwischen etwa 4 und etwa 20 Gew.-% liegt.

11. Verfahren nach einem der Ansprüche 1-10, wobei die erste Reinigungslösung eine oder mehrere Persauerstoffverbindungen umfasst.

12. Verfahren nach Anspruch 11, wobei die Persauerstoffverbindung Wasserstoffperoxid, ein Peroxycarbonsäurezusatz, ein Persulfat, ein Perborat, ein Percarbonat oder eine Mischung davon ist.

13. Verfahren nach einem der Ansprüche 1-12, wobei die erste Reinigungslösung eine Säure und/oder ein Gasbildungsmittel umfasst.

14. Verfahren nach einem der Ansprüche 1-13, wobei die erste Reinigungslösung ein Gasbildungsmittel umfasst und wobei das Gasbildungsmittel Kohlendioxid oder Sauerstoff ausbildet.

15. Verfahren nach einem der Ansprüche 1-14, wobei die zweite Reinigungslösung ein Metallhydroxid umfasst.

16. Verfahren nach einem der Ansprüche 1-15, wobei eine oder beide der ersten und zweiten Reinigungslösungen ein Tensid, einen Builder und/oder ein Lösungsmittel umfassen.

## Revendications

1. Procédé destiné au nettoyage d'une pièce d'équipement en place, le procédé comprenant une pluralité de cycles de nettoyage, la pluralité de cycles de nettoyage comprenant trois cycles de nettoyage ou plus, et chaque cycle de nettoyage comprenant :
(a) l'application d'une première solution de nettoyage provenant d'un premier réservoir d'alimentation (**121**) à travers un premier ensemble de buses (**128**) ; et
(b) l'application d'une seconde solution de nettoyage provenant d'un second réservoir d'alimentation (**131**) à travers un second ensemble de buses (**138**).

2. Procédé selon la revendication 1, dans lequel la pièce d'équipement est sélectionnée parmi un séchoir, un réservoir, une tour de refroidissement, un four ou une courroie.

3. Procédé selon l'une quelconque des revendications 1 ou 2, dans lequel la pièce d'équipement comprend un séchoir-atomiseur (**100**).

4. Procédé selon l'une quelconque des revendications 1 à 3, dans lequel l'étape (a) comprend une première durée, et l'étape (b) comprend une seconde durée qui est plus longue que la première durée.

5. Procédé selon la revendication 4, dans lequel la première durée est d'environ 20 secondes à environ 10 minutes et dans lequel la seconde durée est d'environ 1 minute à environ 60 minutes.

6. Procédé selon l'une quelconque des revendications 1 à 5, dans lequel la pluralité de cycles de nettoyage comprend de 5 à 150 cycles, de préférence de 10 à 100 cycles.

7. Procédé selon l'une quelconque des revendications 1 à 6, dans lequel le premier ensemble de buses (**128**) se compose de buses non pressurisées et dans lequel le second ensemble de buses (**138**) comprend une buse haute pression.

8. Procédé selon l'une quelconque des revendications 1 à 7, dans lequel les première et seconde solutions de nettoyage sont recirculées dans le second réservoir d'alimentation (**131**).

9. Procédé selon l'une quelconque des revendications 1 à 8, dans lequel les première et seconde solutions de nettoyage comprennent des ingrédients actifs, et dans lequel la première solution de nettoyage comprend des ingrédients actifs à une concentration plus élevée que dans la seconde solution de nettoyage.

10. Procédé selon la revendication 9, dans lequel la concentration des ingrédients actifs dans la première solution de nettoyage est comprise entre environ 4 et environ 20 % en poids.

11. Procédé selon l'une quelconque des revendications 1 à 10, dans lequel la première solution de nettoyage comprend un ou plusieurs composés peroxygénés.

12. Procédé selon la revendication 11, dans lequel le composé peroxygéné est le peroxyde d'hydrogène, un acide peroxycarboxylique, un persulfate, un perborate, un percarbonate ou un mélange de ceux-ci.

13. Procédé selon l'une quelconque des revendications 1 à 12, dans lequel la première solution de nettoyage comprend un acide et/ou un agent de formation de gaz.

14. Procédé selon l'une quelconque des revendications 1 à 13, dans lequel la première solution de nettoyage comprend un agent de formation de gaz et dans lequel l'agent de formation de gaz forme du dioxyde de carbone ou de l'oxygène.

15. Procédé selon l'une quelconque des revendications 1 à 14, dans lequel la seconde solution de nettoyage comprend un hydroxyde métallique.

16. Procédé selon l'une quelconque des revendications 1 à 15, dans lequel les première et seconde solutions de nettoyage comprennent un agent tensioactif, un adjuvant et/ou un solvant.
